# EUROPÄISCHE PATENTSCHRIFT

(11) **EP 2 580 599 B1**
(45) Veröffentlichungstag und Bekanntmachung des Hinweises auf die Patenterteilung: **27.05.2015**
(21) Anmeldenummer: 11724638.9
(22) Anmeldetag: 10.06.2011
(51) Int. Cl.: G01P 3/489, G01D 5/244

(54) **GESCHWINDIGKEITSSENSOR MIT COSTAS-SCHLEIFE**
SPEED SENSOR COMPRISING A COSTAS LOOP
CAPTEUR DE VITESSE À BOUCLE DE COSTAS

(30) Priorität: 10.06.2010 DE 102010029961
(43) Veröffentlichungstag der Anmeldung: 17.04.2013
(73) Patentinhaber: Continental Teves AG & Co. oHG, 60488 Frankfurt (DE)
(72) Erfinder: ACKER, Heinrich, 65824 Schwalbach (DE)
(86) Internationale Anmeldenummer: PCT/EP2011/059709
(87) Internationale Veröffentlichungsnummer: WO 2011/154531

(56) Entgegenhaltungen:
- EP-A2- 1 598 672
- WO-A1-00/63897
- US-A- 4 031 466
- US-B1- 6 646 964

## Beschreibung

Die Erfindung betrifft einen Geschwindigkeitssensor gemäß Oberbegriff von Anspruch 1 sowie dessen Verwendung in Kraftfahrzeugen.

Die Messung einer Drehzahl, die in der Technik an vielen Maschinen und Anlagen benötigt wird, ist physikalisch gleichbedeutend mit der Messung der Winkelgeschwindigkeit. Es ist allgemein bekannt, die Drehzahl von Wellen zu messen, indem auf die Welle am Umfang ein periodisches Muster, genannt "Encoder", aufgebracht wird (z.B. ein Zähnrad), welches von einem neben der Welle ortsfest angebrachten Sensor abgetastet wird. Der Sensor hat die Fähigkeit, zwischen Zahn und Zahnlücke (oder anderen periodisch wechselnden Eigenschaften, wie z.B. magnetischer Feldrichtung oder optischer Transparenz) zu unterscheiden. Der Sensor erzeugt daraufhin ein Ausgangssignal, das die gleiche Periodizität aufweist wie das abgetastete Muster.

Ein solcher Sensor gibt, je nach vorhandener Signalverarbeitung, unterschiedliche Signale aus: Es gibt annähernd sinusförmige Signale, die meist direkt vom primären Sensorelement erzeugt werden, oder Rechtecksignale, die meist von der nachgeschalteten Signalverarbeitung durch Komparatoren erzeugt werden. Die sinusförmigen Signale treten oft als sin-/cos-Signalpaar auf, da diese Kombination Vorteile aufweist, u.a. hinsichtlich einer Richtungserkennung. Beliebige Kombinationen der erwähnten Signale sind möglich, so dass bis zu vier Ausgänge (und jede Teilmenge davon) vorhanden sein können: sin, cos, Rechteck in Phase mit sin, Rechteck in Phase mit cos. Alle diese Signale sind frequenzanalog, d.h. die Frequenz ändert sich kontinuierlich innerhalb des durch die Anwendung gegebenen Intervalls. Das elektrische Ausgangssignal ist ein direktes Abbild des Encoders. Auch die Rechtecksignale sind daher nicht als "digital" aufzufassen, denn die diskrete Größe Amplitude diskretisiert nicht die sensorische Information. Je nach Implementierung gibt es auch die Möglichkeit, dass der physikalische sensorische Prozess ein Signal mit der doppelten Frequenz des Encodermusters erzeugt. Das betrifft z.B. bestimmte AMR-Sensorelemente, deren elektrische Signalperiode nur 180° Drehung des (Encoder-) Magnetfeldes umfasst.

Werden Sensoren der beschriebenen Art in Messgeräten oder Regelungen eingesetzt, so ist zu beachten, dass der Messvorgang mit den beschriebenen Ausgangssignalen keineswegs komplett ist: Während die meisten Messsysteme Ausgangssignale liefern, die entweder digital codiert sind oder deren Ausgangsgröße ein unmittelbares Maß für den Messwert ist, so muss bei den hier betrachteten Sensoren die Messgröße erst aus der Ausgangsschwingung bzw. Impulsfolge berechnet werden. Das betrifft Geschwindigkeits-, Winkelgeschwindigkeits-, und Drehzahlmessungen ebenso wie Winkelmessungen, da oft absolute Messungen benötigt werden, die aus dem periodischen Signal durch Zählen gewonnen werden. Die sin-/cos-Signale haben dabei den Vorteil der Interpolationsmöglichkeit, erfordern aber einen höheren Aufwand zur Auswertung.

Die dargestellte Technik wird in gleicher Weise für lineare Weg- und Geschwindigkeitsmessung verwendet; mit linearen statt ringförmigen Encodern.

Bei Regelvorgängen stört die Verzögerung der Frequenzmessung, die sich daraus ergibt, dass die Auflösung der Frequenzmessung an den Zählerstand gekoppelt ist. Für hochauflösende Messungen müssen viele Impulse gezählt werden. Da die Frequenzzählung nur den Mittelwert der Frequenz im Messintervall liefert, ist zusätzlich die Bandbreite der Messung begrenzt.

Insbesondere bei Verwendung von Rechtecksignalen, die bei einigen Anwendungen, z.B. im Automobil, sehr verbreitet sind, wird die Genauigkeit durch Rauschen begrenzt. Anders als bei Sinussignalen, bei denen zumindest ein Teil des Rauschens weit außerhalb des Frequenzbandes der Sinusschwingung liegt und daher gefiltert werden kann, geben Rechtecksignale keine Möglichkeit zur spektralen Trennung der Komponenten. Das Rauschen äußert sich als "Jitter", die vom Phasenrauschen verursachte zufällige Fluktuation der zeitlichen Lage der Impulsflanken: Ein stabiles Rechtecksignal erfordert ein sehr hohes Signal-Rausch-Verhältnis im primären Signal des Sensorelements. Sinkt dieses Verhältnis, können Fehler in Form von zusätzlichen, rauschbedingten Impulsen auftreten, auch wenn die Leistung des Signals die des Rauschens deutlich übersteigt.

Druckschrift EP 1 598 672 A2 schlägt einen Geschwindigkeitssensor vor, mit einem Sensorelement, einem Analog-Digital-Wandler und einer Phasenregelschleife, welche in Software implementiert ist. Zum Zweck, ausreichend große Luftspaltlängen zwischen dem Geschwindigkeitssensor und einem zu erfassenden Encoder zu ermöglichen, wird der Einsatz eines Verstärkers vorgeschlagen.

In der Druckschrift US 4 031 466 A ist ein digitaler Tachometer offenbart, der einen optischen Sensor zur Geschwindigkeitsmessung aufweist, welcher ein Frequenzsignal in Abhängigkeit der erfassten Geschwindigkeit bereitstellt.

In Veröffentlichungsschrift WO 00/63897 ist ein optisches Speicherlaufwerk beschrieben, bei welchem eine Geschwindigkeit in einer Geschwindigkeitsdetektionsschaltung berechnet wird mittels einer Phasenregelungsschleife und einer Frequenzmodulation.

Patentschrift 6 646 964 B1 schlägt ein Datenlaufwerk mit wechselbaren Datenträgern, als Scheiben (Disks) ausgebildet vor. Dabei werden Signale mittels einer Phasenregelschleife in einer Leseeinheit verarbeitet, wobei eine Costasschleife eingesetzt wird.

Der Erfindung liegt die Aufgabe zugrunde, einen Geschwindigkeitssensor vorzuschlagen, welcher eine relativ hohe Präzision der Frequenz- und/oder Winkelmessung ermöglicht.

Diese Aufgabe wird erfindungsgemäß gelöst durch den Geschwindigkeitssensor gemäß Anspruch 1.

Insbesondere wird durch diesen Geschwindigkeitssensor außerdem die Rauschempfindlichkeit reduziert, damit Signale mit höherem Rauschanteil genutzt werden können, ohne dass Fehler auftreten. Die Verbesserung soll dabei nicht durch eine Reduzierung der Bandbreite bzw. durch eine Erhöhung der Verzögerung erkauft werden.

Unter einer Costas-Schleifen-Einheit wird bevorzugt eine elektronische Einrichtung verstanden, welche eine Costas-Schleife bzw. "Costas-Loop" zur Signalverarbeitung umfasst.

Der Analog-Digital-Wandler ist vorzugsweise als Sigma-Delta-Modulator ausgebildet.

Die Costas-Schleifen-Einheit ist so ausgebildet, dass sie zumindest ein Frequenzausgangssignal oder ein Frequenzausgangssignal und ein Phasenausgangssignal bereitstellt, jeweils in Abhängigkeit des Sensorelementausgangssignals.

Es ist bevorzugt, dass der Ausgang des Analog-Digital-Wandlers, der einen Bitstrom bereitstellt, jeweils mit einem ersten Multiplizierer und einem zweiten Multiplizierer verbunden ist, wobei dem ersten und zweiten Multiplizierer jeweils zusätzlich ein Taktsignal einer Taktgebereinheit zugeführt werden, wobei die dem ersten und dem zweiten Multiplizierer zugeführten Taktsignale zueinander um 90° phasenverschoben sind, wobei die Ausgangssignal des ersten und zweiten Multiplizierers jeweils einem Tiefpassfilter zugeführt werden, deren Ausgänge jeweils einer gemeinsamen Phasendetektoreinheit zugeführt werden, welche ausgangsseitig mit einer Reglereinheit verbunden ist, die ausgangsseitig mit der Taktgebereinheit verbunden ist. Insbesondere umfasst bzw. bildet die Costas-Schleifen-Einheit obige bevorzugte Schaltung.

Die Taktgebereinheit ist vorzugsweise als numerisch gesteuerter Oszillator, auch digital gesteuerter Oszillator "Digitally Controlled Oscillator", "DCO" bzw. "Numerically Controlled Oscillator", "NCO" genannt, ausgebildet, wobei die Taktgebereinheit das das Frequenzausgangssignal oder Frequenzausgangssignal und/oder das Phasenausgangssignal als Ausgangssignale der Costas-Schleifen-Einheit bereitstellt.
Es ist bevorzugt, dass das Ausgangssignal der Phasendetektoreinheit und das Phasenausgangssignal der Taktgebereinheit addiert werden, insbesondere in einem Summierer, wodurch ein korrigiertes Phasensignal erzeugt wird, welches ein Ausgangssignal der Costas-Schleifen-Einheit bildet, insbesondere alternativ oder zusätzlich zum Phasenausgangssignal der Taktgebereinheit. Unter diesem Addieren bzw. dem Summierer wird insbesondere ebenfalls ein Subtrahieren bzw. eine entsprechende Beschaltung verstanden. Dieses Addieren und damit die Bildung des korrigierten Phasensignals finden besonders bevorzugt in einer Korrekturvorrichtung des Geschwindigkeitssensors statt.

Der Geschwindigkeitssensor umfasst vorzugsweise eine Ausgangsschaltung, welcher von der Costas-Schleifen-Einheit ein Frequenzsignal und mindestens ein Phasensignal zugeführt werden, insbesondere das Frequenzausgangssignal der Taktgebereinheit und das Phasenausgangssignal der Taktgebereinheit und/oder das korrigierte Phasensignal, wobei die Ausgangsschaltung wenigstens eine Treiberstufe zum Senden des Ausgangssignals des,Ge= schwindigkeitssensors über wenigstens eine Leitung aufweist und eine Logikeinheit aufweist, mit welcher das Ausgangssignal der Ausgangsschaltung mit definierten Signaleigenschaften als definierte Schnittstelle bereitgestellt wird.

Es ist bevorzugt, dass die Logikeinheit programmierbar und/oder umschaltbar ausgebildet ist, so dass das Ausgangssignal der Ausgangsschaltung und damit des Geschwindigkeitssensors an unterschiedliche Schnittstellen-Anforderungen anpassbar ausgebildet ist. Die Logikeinheit umfasst dabei insbesondere eine einfache Verbindungsleitung zwischen einem Flip-Flop eines Phasenregisters und dem Ausgang, wobei die Treiberstufe immer schaltet, wenn sich der Zustand dieses Flip-Flops ändert, d.h. die Phase einen bestimmten Schwellwert überschreitet. Alternativ vorzugsweise oder zusätzlich umschaltbar ist die Logikeinheit so ausgebildet, dass die Logikeinheit ein Datenwort erzeugt, in welchem wenigstens eine Frequenzinformation oder eine Frequenzinformation und/oder Phaseninformation codiert ist.

Zumindest die Costas-Schleifen-Einheit und die Ausgangsschaltung sind vorzugsweise als digitale Schaltungen ausgebildet.

Es ist zweckmäßig, dass die Logikeinheit eine Kompensationseinrichtung aufweist, welche Kompensations-Informationen, insbesondere in wenigstens einer Tabelle, umfasst, mit denen Fehler eines Encoders, dessen moduliertes magnetisches Feld oder optisches Muster das Sensorelement erfasst, kompensiert werden können und/oder mit denen Temperatureinflüsse kompensierbar sind und/oder mit denen eine Phasenverschiebung einstellbar oder programmierbar ist und/oder mit denen eine Verzögerungszeit im Signalpfad innerhalb des Sensors kompensierbar ist, wozu die Kompensationseinrichtung von außerhalb des Geschwindigkeitssensors angesteuert wird und/oder vom Geschwindigkeitssensor intern selbstständig angesteuert wird.

Insbesondere liegt dem erfindungsgemäßen Geschwindigkeitssensor der Gedanke zu Grunde, einen Paradigmenwechsel bei der Bestimmung der Frequenz bzw. des Winkels vorzunehmen. An die Stelle einer Schaltung zur Impulsformung aus dem primären Sinussignal (Eingangssignal), wie im Stand der Techni bekannt, tritt eine Phasenregelung. Ein Oszillator in der Messschaltung wird auf gleiche Frequenz und Phasenlage wie das Eingangssignal geregelt. Das System wird vorzugsweise vollständig digital ausgeführt, inklusive des Oszillators. Das bedeutet, der Oszillator ist ein sogenannter numerisch gesteuerter Oszillator bzw. NCO ("Numerical Controlled Oscillator"), auch Phasenakkumulator genannt. Diese Oszillatoren haben beispielsweise digitale Register, in denen die gerade vorliegende Frequenz und Phase abgelegt sind, so dass diese Informationen als binäre Zahlenwerte zur Weiterverarbeitung direkt vorliegen. Die Phasenregelung ist dabei als Costas-Schleife in einer Costas-Schleifen-Einheit ausgeführt. Diese Phasenregelschleife weist ein verbessertes Lock-in und ein geringeres Phasenrauschen im Vergleich zu herkömmlichen Phasenregelschleifen auf.

Da jede Regelung einen Regelfehler aufweist, ist damit zu rechnen, dass es eine unerwünschte Phasenverschiebung zwischen Eingangssignal und NCO gibt, die sich zeitlich ändert. Diese Eigenschaft jeder Phasenregelung könnte für die vorliegende Anwendung relevant sein, weil die Phase, hier gleichbedeutend mit Winkel, eine der beiden Messgrößen ist. Je nach Einsatzzweck kann es sogar die Messgröße sein, der das hauptsächliche Interesse gilt. Daher wird zweckmäßigerweise vorgeschlagen, die Costas-Schleifen-Einheit um eine Vorrichtung zur Verbesserung der Phasenbestimmung bzw. eine Korrekturvorrichtung zu ergänzen. Voraussetzung für diese Korrekturvorrichtung ist die Verwendung eines, insbesondere linearen, Phasendetektors. Ein solcher Detektor liefert am Ausgang ein Signal, das proportional (im Rahmen der Wortbreite der digitalen Implementierung) zur Phasendifferenz ist, im Gegensatz zu den verbreiteten Phasendetektoren, die lediglich eine binäre Information über ein Vor- oder Nacheilen eines der Eingangssignale liefern.

Die Korrekturvorrichtung besteht bevorzugt darin, die von der Phasendetektoreinheit gelieferte Phasendifferenz zur Phase der Taktgebereinheit zu addieren, damit der aktuelle Phasenfehler (= Phasendifferenz) korrigiert wird.

Das Eingangssignal zur Costas-Schleifen-Einheit wird vorzugsweise durch einen Sigma-Delta-Modulator erzeugt, der das Sensorelement und die Costas-Schleife verbindet. Er erzeugt aus der elektrischen Größe des Sensorelements einen Bitstrom, mit dem die Costas-Schleife arbeitet.

Eine bevorzugte Beschreibung des Regelvorgangs und der Bestandteile der Costas-Schleife ist mit dem Ausführungsbeispiel angegeben.

Effektiv handelt es sich bei der bevorzugten Lösung um eine schmalbandige Bandfilterung des Signals des Sensorelements, wobei die Mittenfrequenz des Filters stets auf die Frequenz des Sensorelements eingestellt wird. Dadurch werden Störungen effektiv ausgeblendet und das Ziel erreicht, mit stark verrauschten Sensorsignalen Frequenz und Phase messen zu können. Die Präzision wird verbessert, weil Störungen unterdrückt werden, die Jitter verursachen. Durch Wahl der Tiefpass-Eckfrequenzen der Tiefpässe in den Rückkopplungspfaden der Costas-Schleifen-Einheit kann die Bandbreite der Frequenzmessung bestimmt werden. Die digitale Implementierung erlaubt dabei eine dynamische Anpassung der Filtercharakteristik an die Erfordernisse. Eckfrequenz, Filterordnung, Koeffizienten: Alle Parameter können je nach Anwendung und aktueller Eingangsfrequenz angepasst werden. Diese Aussage gilt auch für die Reglereinheit, welche als einfacher PID-Regler ausgelegt werden kann, aber nicht muss. Insbesondere kann der Regler mehrere Betriebsarten aufweisen, die sich je nach Eingangssignal dynamisch ablösen. Als Gründe bzw. Bedingungen für den Wechsel einer Betriebsart bzw. zwischen Betriebsarten kommen unter anderem in Frage:
1. Direkt nach dem Einschalten des Systems oder nach dem Verlust des Lock-in ein Suchmodus, der die Änderungsrate der NCO-Frequenz auf Kosten der Phasenstabilität erhöht.
2. Bestimmte Frequenzbereiche können mit unterschiedlichen maximalen Änderungsraten der Frequenz assoziiert werden.
3. Die Amplitude der Eingangsfrequenz kann gemessen werden und die Änderungsrate der Frequenz z.B. bei kleinen Amplituden begrenzt werden, um einen Verlust des Lock-in zu vermeiden.

Je nach Anwendung ist zweckmäßigerweise ein Fehlerflag vorzusehen, das einen Verlust des Lock-in oder ein nicht ausreichendes Eingangsignal einem übergeordneten Regelsystem, beispielsweise einer elektronischen Kontrolleinheit ECU, signalisiert.

Die im Vergleich zu üblichen, bisher bekannten, Drehzahl- bzw. Winkelgeschwindigkeitssensoren völlig andere Implementierung der Signalverarbeitung ermöglicht neue beispielhafte, bevorzugte Funktionen, die bei üblichem Systemaufbau entweder nicht möglich oder nur unter großen Schwierigkeiten realisierbar sind:
1. Das Ausgangssignal des Geschwindigkeitssensors ist mittels der Ausgangsschaltung frei programmierbar. Geht man davon aus, dass eine Impulsfolge am Ausgang die Phase kodieren soll, so kann bei bestimmten Werten des Phasenregisters im NCO der Impulsausgang seinen Wert ändern. Diese Werte sind aufgrund der Implementierung frei programmierbar, das bedeutet, dass die Anzahl der Impulse nicht mehr an die Anzahl der Perioden des Encoders gebunden ist. Es ist möglich, dass ein Encoder mit z.B. 41 Zähnen am Umfang pro Umdrehung z.B. 113 Impulse erzeugt. Die Anzahl der Impulse pro Umdrehung könnte sogar eine gebrochene Zahl sein, wenn der Anwender dies wünscht.
2. Die freie Programmierbarkeit bezieht sich auch auf eine Phasenverschiebung am Ausgang. Daher ist der neue Sensor besonders dafür geeignet, vorhandene Sensoren, die ein anderes Übertragungsverhalten haben, zu imitieren und als Ersatzteil oder alternatives Produkt in entsprechenden Systemen Verwendung zu finden.
3. Aus 1. und 2. folgt, dass der neue Sensor ideal dafür geeignet ist, in bestehende Systeme integriert zu werden, in denen der Encoder durch einen messtechnisch besseren Encoder ersetzt wird, ohne dass an der Elektronik auf Empfängerseite Änderungen zulässig sind.
4. Bislang bedeutet eine Festlegung auf eine Impulsanzahl pro Umdrehung in Verbindung mit einem Encoderradius ebenfalls die Festlegung einer Periodenlänge am Encoderumfang. Somit ergeben sich in der Praxis sehr große Unterschiede in der Periodenlänge, je nach Anwendung. Ein universell verwendbarer Sensor, der hinsichtlich der Kosten von hohen Stückzahlen profitieren soll, muss all diese Periodenlängen unterstützen. Eine Festlegung auf eine feste Periodenlänge hat aber messtechnische Vorteile beim Sensorelement. Diese können mit dem neuen Sensor erstmals genutzt werden, weil zu einem vom Anwender festgelegten Encoderradius und der Impulsanzahl pro Umdrehung die bevorzugte Periodenlänge gewählt werden kann. Es ergibt sich daraus eine Periodenanzahl pro Umdrehung, die durch entsprechende Programmierung des Sensors in die gewünschte Impulsanzahl umgesetzt wird.
5. Kompensation der Verzögerungszeit: Jedes Sensorsystem hat eine Verzögerungszeit zwischen einem Stimulus der Messgröße und der zugehörigen Reaktion am Ausgang. Wenn die Verzögerungszeit nicht proportional zur Periodendauer der zu messenden Frequenz ist, bedeutet das für einen Winkelgeschwindigkeitssensor, dass es eine frequenzabhängige Phasenverschiebung des Ausgangssignals gibt. Da der neue Sensor als digitales System nicht von Parametertoleranzen oder -drift betroffen ist, lässt sich dieser Zusammenhang beim Entwurf bestimmen, ggf. auch später durch Tests, dann auch mit dem Analogteil am Eingang (Sensorelement, Modulator). Eine Kompensation kann auf einfache Weise aufgebaut werden, indem der Ausgang frequenzabhängig gerade so verschoben schaltet, dass keine Phasenverschiebung auftritt. In Verbindung mit 2. ist anzumerken, dass die Verschiebung nicht nur in Richtung einer Verzögerung erfolgen kann, sondern auch in Richtung auf eine Vorverlegung. Die scheinbare Laufzeit durch den Sensor kann damit zu Null gesetzt werden (Die Kausalität wird damit natürlich nicht aufgehoben: Die Nullung ist exakt nur im stationären Zustand, d.h. bei konstanter Frequenz.).
6. Kompensation von Encoderfehlern: Ideale Encoder sind exakt periodisch; reale Encoder nur ungefähr. Die Unterschiede in der Länge der einzelnen "Perioden" führen zu scheinbaren, wiederkehrenden Änderungen der Frequenz. In vielen Anwendungen gibt es nun Betriebszustände, die sich durch hohen Gleichlauf auszeichnen, z.B. wenn ein Antrieb abgeschaltet wurde. Nur durch Reibung bedingt stellt sich dann eine gleichmäßige Verlangsamung ein, die keine kurzzeitigen Schwankungen kennt. Wenn dem Sensor ein solcher Betriebszustand mitgeteilt werden kann, so können die einzelnen Periodendauern in einer Tabelle abgelegt werden, die später, in Betriebsarten mit kurzzeitigen Schwankungen, zur Kompensation der Encoderfehler benutzt werden können.

Die Erfindung bezieht sich auf die Verwendung des Geschwindigkeitssensors in Kraftfahrzeugen, insbesondere als Kurbelwellendrehzahlsensor oder Raddrehzahlsensor oder als Drehzahlsensor in Antriebssträngkomponenten, dabei beispielsweise als Getriebedrehzahlsensor, oder Turboladerdrehzahlsensor oder alternativ vorzugsweise in linearen, inkrementellen Sensoren.

Weitere bevorzugte Ausführungsformen ergeben sich aus den Unteransprüchen und der nachfolgenden Beschreibung eines Ausführungsbeispiels an Hand von Figuren.

### Bezugszeichen

- 1: Sensorelement: Das physikalische Wandlerelement. Wandelt diejenige Größe, die vom Encoder moduliert wird, in eine elektrische Größe
- 2: Analog-Digital-Wandler, beispielgemäß als Sigma-Delta-Modulator ausgebildet
- 3: Taktgebereinheit, beispielhaft als numerisch gesteuerter Oszillator "NCO" ausgebildet, dargestellt mit zwei Ausgängen "sin" und "cos", die um 90° gegeneinander phasenverschoben sind.
- 4: Reglereinheit bzw. Regler: bestimmt durch seine Übertragungsfunktion die "Übersetzung" von Phasendifferenz in die Änderung der NCO-Frequenz
- 5: Phasendetektoreinheit bzw. Phasendetektor
- 6: Frequenzregister
- 7: Phasenregister
- 8: Logikeinheit bzw. Logik-Block der Ausgangsschaltung für die Impulserzeugung als Ausgangssignal des Geschwindigkeitssensors

Ein Ausführungsbeispiel des Geschwindigkeitssensors wird durch die Figuren 1 bis 4 schematisch illustriert. Fig. 1 zeigt die Schaltung zur Frequenz- und Phasenmessung mit Costas-Schleifen-Einrichtung bzw. Costas-Schleife und Sensorelement, Fig. 2 die Lösung mit einer Korrekturvorrichtung zur Verbesserung der Phasenmessung bzw. zur Erzeugung eines korrigierten Phasensignals. In Fig. 3 ist der Aufbau einer beispielhaften Taktgebereinheit als NCO dargestellt. Fig. 4 zeigt die Ausgangsschaltung zur Erzeugung der üblichen Ausgangsimpulse.

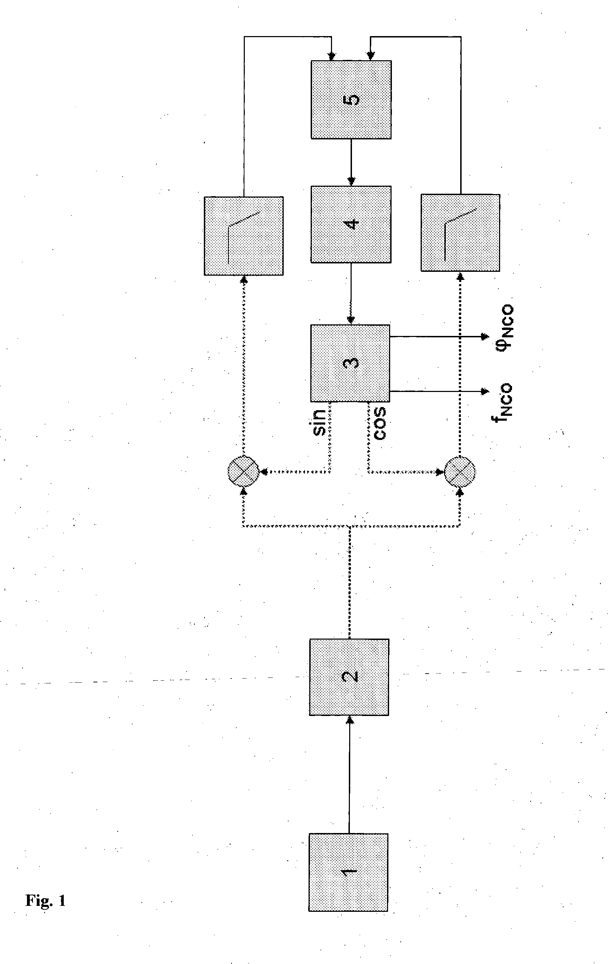

In Fig. 1 beginnt der Signalfluss mit dem Sensorelement 1. Das Ausgangssignal, üblicherweise eine Spannung, wird an den Sigma-Delta-Modulator 2 weitergegeben. Der Modulator erzeugt daraus eine Bitfolge ("Bitstrom"), deren Dichte an Einsen proportional zum Sensorsignal ist. Die Bitströme sind zur Verdeutlichung durch die punktierten Linien dargestellt. Das Ausgangssignal des Modulators wird an die Eingänge von zwei Multiplizierern (dargestellt durch das übliche Schaltsymbol) gelegt, deren jeweils anderer Eingang an einem Ausgang des NCO 3 als Taktgebereinheit liegt. Die NCO-Ausgänge sind mit "sin" und "cos" bezeichnet, um die 90°-Phasenverschiebung zwischen den Ausgängen zu illustrieren. Die Multiplizierer sind, da es sich um Bitströme handelt, lediglich einzelne XOR-Gatter. Sie erzeugen zwei weitere Bitströme, die als Frequenzen Summe und Differenz der Eingangsfrequenzen enthalten, d.h. der des Sensorelements und der des NCO 3. Die beiden nachgeschalteten Tiefpässe, dargestellt mit den üblichen Symbolen, filtern aus dem Frequenzgemisch nur die Differenz heraus. Dabei entstehen aus den (hochfrequenten) Bitströmen niederfrequente Signale, die aber eine Wortbreite haben, die deutlich über 1 Bit liegt, z.B. 10 Bit. Aufgrund der Phasenverschiebung der NCO-Ausgänge sind auch die Ausgangssignale der Tiefpässe um 90° gegeneinander verschoben.

Daher lässt sich aus diesen Signalen ein Winkel bestimmen. Das ist die Aufgabe der Phasendetektoreinheit 5. Deren Ausgangssignal entspricht der Phasendifferenz zwischen Eingang und NCO. Die Phasendetektoreinheit nutzt hierfür beispielgemäß zur Berechnung den Vierquadranten-Arcustangens aus ihren Eingängen. Die Verwendung des Vierquadranten-Arcustangens hat den Vorteil, den Eindeutigkeitsbereich vom üblichen Intervall [-π/2, π/2] auf [-π, π] zu verdoppeln. Die Phasendifferenz wird in Reglereinheit 4 unter Verwendung einer geeigneten Übertragungsfunktion und ggf. einer geeigneten Regelstrategie in ein Signal umgesetzt, das die Frequenz des NCOs 3 steuert. Damit ist der Regelkreis geschlossen.

Die Ausgänge der Schaltung sind die Frequenz f_{NCO} und die Phase ϕ_{NCO} des NCO. Diese Werte liegen in den NCO-Registern direkt vor.

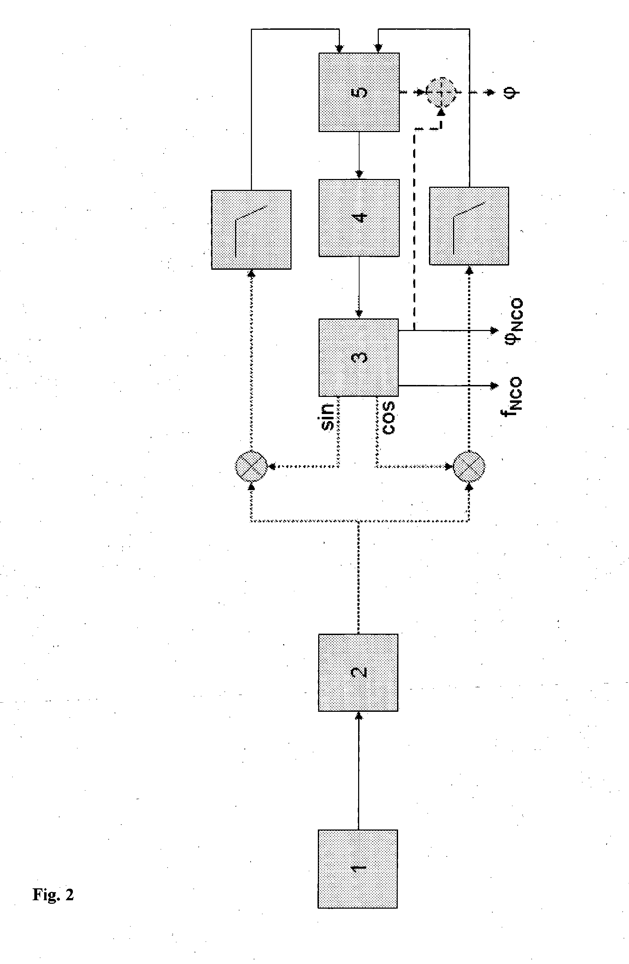

Fig. 2 stellt die beispielgemäße Ergänzung der Costas-Schleifen-Einheit bzw. Costas-Schleife dar. Die Ergänzung, gestrichelt dargestellt, ist der Unterschied zu Fig. 1. Vom Ausgang ϕ_{NCO} des NCO 3 wird die Phase übernommen und zu einem Summierer bzw. Addierer geführt, an dessen anderem Eingang die Phasendifferenz der Phasendetektoreinheit 5 liegt. Die Summe bzw. die Differenz, je nach Vorzeichenregelung der jeweiligen Implementierung, ist dann die korrigierte Phase bzw. das korrigierte Phasensignal. Kurzzeitige Regelfehler wirken sich bei dieser Form weniger auf die Phasenmessung aus, weil die Verzögerung durch den Regelvorgang entfällt. Dadurch verringern sich die Anforderungen an die Regelgüte des gesamten Systems.

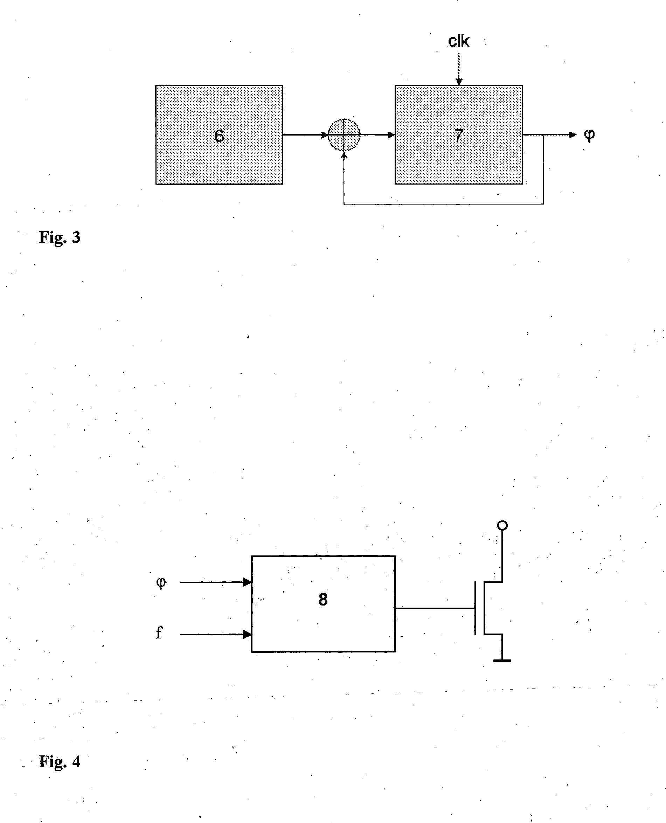

Fig. 3 zeigt die Bestandteile des NCOs 3 als Taktgebereinheit. Das Phasenregister 7 enthält die aktuelle Phase des NCO. In jedem Schritt, ausgelöst durch das Taktsignal clk dessen Frequenz konstant ist, wird der Inhalt des Phasenregisters aktualisiert, indem der Wert des Frequenzregisters 6 addiert wird. Damit wird die Rate, mit der sich die Phase ändert, proportional zum Inhalt des Frequenzregisters. Reglereinheit 4 wirkt auf dieses Frequenzregister, indem er in Abhängigkeit von der Phasendifferenz einen neuen Frequenzwert einstellt. Die Ausgänge "sin" und "cos" werden aus der. Phase ϕ abgeleitet, indem bei bestimmten Werten der Phase, die geraden und ungeraden Vielfachen von 90° entsprechen, der Wert des Ausgangs einfach umgeschaltet wird. Dazu genügt jeweils ein einzelnes Flip-Flop und ein Gatter, vorausgesetzt, die Phase ist so skaliert, dass es eine binäre Stelle im Phasenregister gibt, die 90° entspricht.

Im Unterschied zu analogen Implementierungen von Phasenregelschleifen, die auf VCOs basieren, kann ein NCO immer nur mit diskreten, per Design festgelegten Frequenz- und Phasenwerten arbeiten. Dadurch ergibt sich jedoch keinerlei Einschränkung für die praktische Anwendung, da die Auflösung praktisch beliebig gesteigert werden kann. Für jedes zusätzliche Bit müssen lediglich die Register und der Addierer entsprechend verbreitert werden, was nur wenige zusätzliche Gatter erfordert.

Fig. 4 illustriert die Ausgangsschaltung. Es handelt sich im Wesentlichen um Logikeinheit 8 bzw. um einen Logik-Block mit Frequenz und Phase als Eingängen und einem Ausgang, der einen Schalttransistor als Treiberstufe zur Erzeugung der Ausgangsimpulse bedient. Gezeigt ist beispielhaft ein Open-Drain-Ausgang, neben Open-Collector ist aber ebenso eine Push-Pull-Stufe in MOS- oder Bipolar-Technik denkbar, ebenso wie jede andere Schaltung, die mit elektronischen Mitteln zwei Ausgangspegel erzeugen kann.

Der Inhalt der Logikeinheit bzw. des Logik-Blocks hängt ab von den Funktionen, die mit dem Sensor möglich sein sollen. Im einfachsten Fall kann der Block aus einer einfachen Verbindungsleitung zwischen einem Flip-Flop des Phasenregisters und dem Ausgang bestehen. Dann schaltet der Transistor immer, wenn sich der Zustand dieses Flip-Flop ändert, d.h. die Phase einen bestimmten Schwellwert überschreitet. Funktionen wie die oben erwähnte Programmierbarkeit, Kompensation der Verzögerungszeit und Kompensation von Encoderfehlern erfordern jedoch eine Logik, bei denen der Schwellwert aufgrund weiterer Informationen verschoben werden kann.

## Patentansprüche

1. Geschwindigkeitssensor,
wobei dieser als Kurbelwellendrehzahlsensor oder Raddrehzahlsensor oder Getriebedrehzahlsensor oder Turboladerdrehzahlsensor ausgebildet ist, umfassend zumindest ein Sensorelement (1) und einen Analog-Digital-Wandler (2), welcher die Sensorelementausgangssignale digitalisiert, **dadurch gekennzeichnet, dass** der Geschwindigkeitssensor eine Costas-Schleifen-Einheit (3, 4, 5) aufweist, welche am Ausgang des Analog-Digital-Wandlers (2) angeschlossen ist.

2. Geschwindigkeitssensor nach Anspruch 1, **dadurch gekennzeichnet, dass** der Analog-Digital-Wandler (2) als Sigma-Deltä-Modulator ausgebildet ist.

3. Geschwindigkeitssensor nach Anspruch 1 oder 2, **dadurch gekennzeichnet, dass** die Costas-Schleifen-Einheit (3, 4, 5) so ausgebildet ist, dass sie zumindest ein Frequenzausgangssignal (f_{NCO}) oder ein Frequenzausgangssignal (f_{NCO}) und ein Phasenausgangssignal (ϕ_{NCO}) bereitstellt, jeweils in Abhängigkeit des Sensorelementausgangssignals.

4. Geschwindigkeitssensor nach mindestens einem der Ansprüche 1 bis 3, **dadurch gekennzeichnet, dass** der Ausgang des Analog-Digital-Wandlers (2), der einen Bitstrom bereitstellt, jeweils mit einem ersten Multiplizierer und einem zweiten Multiplizierer verbunden ist, wobei dem ersten und zweiten Multiplizierer jeweils zusätzlich ein Taktsignal einer Taktgebereinheit (3) zugeführt werden, wobei die dem ersten und dem zweiten Multiplizierer zugeführten Taktsignale (sin, cos) zueinander um 90° phasenverschoben sind, wobei die Ausgangssignale des ersten und zweiten Multiplizierers jeweils einem Tiefpassfilter zugeführt werden, dessen Ausgang jeweils einer gemeinsamen Phasendetektoreinheit (5) zugeführt wird, welche ausgangsseitig mit einer Reglereinheit (4) verbunden ist, die ausgangsseitig mit der Taktgebereinheit (3) verbunden ist.

5. Geschwindigkeitssensor nach mindestens einem der Ansprüche 1 bis 4, **dadurch gekennzeichnet, dass** die Taktgebereinheit (3) als numerisch gesteuerter Oszillator ausgebildet ist, wobei die Taktgebereinheit das Frequenzausgangs signal (f_{NCO}) oder das Frequenzausgangssignal und das Phasenausgangssignal (ϕ_{NCO}) als Ausgangssignale der Costas-Schleifen-Einheit bereitstellt.

6. Geschwindigkeitssensor nach mindestens einem der Ansprüche 1 bis 5, **dadurch gekennzeichnet, dass** das Ausgangssignal der Phasendetektoreinheit (5) und das Phasenausgangssignal (ϕ_{NCO}) der Taktgebereinheit (3) addiert werden, insbesondere in einem Summierer, wodurch ein korrigiertes Phasensignal (ϕ) erzeugt wird, welches ein Ausgangssignal der Costas-Schleifen-Einheit bildet, insbesondere alternativ oder zusätzlich zum Phasenausgangssignal (ϕ_{NCO}) der Taktgebereinheit (3).

7. Geschwindigkeitssensor nach mindestens einem der Ansprüche 1 bis 6, **dadurch gekennzeichnet, dass** der Geschwindigkeitssensor eine Ausgangsschaltung umfasst, welcher von der Costas-Schleifen-Einheit ein Frequenzsignal und mindestens ein Phasensignal zugeführt werden, insbesondere das Frequenzausgangssignal (f_{NCO}) der Taktgebereinheit (3) und das Phasenausgangssignal (ϕ_{NCO}) der Taktgebereinheit und/oder das korrigierte Phasensignal (ϕ), wobei die Ausgängsschaltung wenigstens eine Treiberstüfe zum Senden des Ausgangssignals des Geschwindigkeitssensors über wenigstens eine Leitung aufweist und eine Logikeinheit (8) aufweist, mit welcher das Ausgangssigntil der Ausgangsschaltung mit definierten Signaleigenschaften als definierte Schnittstelle bereitgestellt wird.

8. Geschwindigkeitssensor nach Anspruch 7, **dadurch gekennzeichnet, dass** die Logikeinheit (8) programmierbar und/oder umschaltbar ausgebildet ist, so dass das Ausgangssignal der Ausgangsschaltung und damit des Geschwindigkeitssensors an unterschiedliche Schnittstellen-Anforderungen anpassbar ausgebildet ist.

9. Geschwindigkeitssensor nach Anspruch 7 oder 8, **dadurch gekennzeichnet, dass** die Logikeinheit (8) eine Kompensationseinrichtung aufweist, welche Kompensations-Informationen, insbesondere in wenigstens einer Tabelle, umfasst, mit denen Fehler eines Encoders, dessen moduliertes magnetisches Feld oder optisches Muster das Sensorelement erfasst, kompensiert werden können und/oder mit denen Temperatureinflüsse kompensierbar sind und/oder mit denen eine Phasenverschiebung einstellbar oder programmierbar ist und/oder mit denen eine Verzögerungszeit im Signalpfad innerhalb des Sensors kompensierbar ist, wozu die Kompensationseinrichtung von außerhalb des Geschwindigkeitssensors angesteuert wird und/oder vom Geschwindigkeitssensor intern selbstständig angesteuert wird.

## Claims

1. Speed sensor, wherein said speed sensor is in the form of a crankshaft speed sensor or wheel speed sensor or gear speed sensor or turbocharger speed sensor, comprising at least one sensor element (1) and an analog-to-digital converter (2), which digitizes the sensor-element output signals,
**characterized in that**
the speed sensor comprises a Costas loop unit (3, 4, 5), which is connected to the output of the analog-to-digital converter (2).

2. Speed sensor according to Claim 1, **characterized in that** the analog-to-digital converter (2) is in the form of a sigma-delta modulator.

3. Speed sensor according to Claim 1 or 2, **characterized in that** the Costas loop unit (3, 4, 5) is designed so that it provides at least a frequency output signal (f_{NCO}) or a frequency output signal (f_{NCO}) and a phase output signal (ϕ_{NCO}), each on the basis of the sensor-element output signal.

4. Speed sensor according to at least one of Claims 1 to 3, **characterized in that** the output of the analog-to-digital converter (2), which provides a bit stream, is connected in each case to a first multiplier and to a second multiplier, wherein additionally the first multiplier and the second multiplier are each fed with a clock signal from a clock generator unit (3), wherein the clock signals (sin, cos) fed to the first multiplier and the second multiplier are offset in phase by 90° with respect to one another, wherein the output signals from the first multiplier and the second multiplier are fed in each case to a low-pass filter, the output of which is respectively fed to a common phase detector unit (5), which is connected on the output side to a controller unit (4), the output of which is connected to the clock generator unit (3).

5. Speed sensor according to at least one of Claims 1 to 4, **characterized in that** the clock generator unit (3) is in the form of a numerically controlled oscillator, wherein said clock generator unit provides the frequency output signal (f_{NCO}) or the frequency output signal and the phase output signal (ϕ_{NCO}) as output signals from the Costas loop unit.

6. Speed sensor according to at least one of Claims 1 to 5, **characterized in that** the output signal from the phase detector unit (5) and the phase output signal (ϕ_{NCO}) from the clock generator unit (3) are summated, in particular in a summator, thereby generating a corrected phase signal (ϕ) that forms an output signal from the Costas loop unit, in particular alternatively or additionally to the phase output signal (ϕ_{NCO}) from the clock generator unit (3).

7. Speed sensor according to at least one of Claims 1 to 6, **characterized in that** the speed sensor comprises an output circuit to which are fed from the Costas loop unit a frequency signal and at least one phase signal, in particular the frequency output signal (f_{NCO}) from the clock generator unit (3) and the phase output signal (ϕ_{NCO}) from the clock generator unit and/or the corrected phase signal (ϕ), wherein the output circuit comprises at least one driver stage for transmitting the output signal from the speed sensor over at least one line, and comprises a logic unit (8), which is used to provide the output signal from the output circuit such that it has defined signal properties as a defined interface.

8. Speed sensor according to Claim 7, **characterized in that** the logic unit (8) is designed to be programmable and/or switchable, so that the output signal from the output circuit and hence from the speed sensor is designed to be adaptable to different interface requirements.

9. Speed sensor according to Claim 7 or 8, **characterized in that** the logic unit (8) comprises a compensation device, which contains, in particular in at least one table, compensation data, which can be used to compensate for errors of an encoder, the modulated magnetic field or optical pattern of which the sensor element detects, and/or can be used to compensate for temperature effects and/or can be used to adjust or program a phase offset and/or can be used to compensate for a delay in the signal path within the sensor, for which purpose the compensation device is controlled from outside the speed sensor and/or is controlled internally, autonomously by the speed sensor.

## Revendications

1. Capteur de vitesse,
dans lequel celui-ci est réalisé sous la forme d'un capteur de vitesse de rotation de vilebrequin ou de capteur de vitesse de rotation de roue ou de capteur de vitesse de rotation de transmission ou de capteur de vitesse de rotation de compresseur turbo, comprenant au moins un élément capteur (1) et un convertisseur analogique-numérique (2) qui numérise des signaux de sortie de l'élément capteur, **caractérisé en ce que** le capteur de vitesse comprend une unité à boucle de Costas (3, 4, 5) qui est reliée à la sortie du convertisseur analogique-numérique (2).

2. Capteur de vitesse selon la revendication 1, **caractérisé en ce que** le convertisseur analogique-numérique (2) est réalisé sous la forme d'un modulateur sigma-delta.

3. Capteur de vitesse selon la revendication 1 ou 2, **caractérisé en ce que** l'unité à boucle de Costas (3, 4, 5) est réalisée de manière à fournir respectivement au moins un signal de sortie de fréquence (f_{NCO}) ou un signal de sortie de fréquence (f_{NCO}) et un signal de sortie de phase (ϕ_{NCO}), en fonction du signal de sortie de capteur.

4. Capteur de vitesse selon au moins l'une des revendications 1 à 3, **caractérisé en ce que** la sortie du convertisseur analogique-numériques (2), qui fournit un train binaire, est respectivement connectée à un premier multiplieur et à un second multiplieur, dans lequel un signal d'horloge d'une unité génératrice d'horloge (3) est en outre respectivement fourni aux premier et second multiplieurs, dans lequel les signaux d'horloge (sin, cos) délivrés aux premier et second multiplieurs sont déphasés de 90° l'un par rapport à l'autre, dans lequel les signaux de sortie des premier et second multiplieurs sont respectivement délivrés à un filtre passe-bas dont la sortie est respectivement délivrée à une unité de détection de phase commune (5) connectée, du côté de la sortie, à une unité de régulation (4) qui est connectée, du côté de la sortie, à l'unité génératrice d'horloge (3).

5. Capteur de vitesse selon au moins l'une des revendications 1 à 4, **caractérisé en ce que** l'unité génératrice d'horloge (3) est réalisée sous la forme d'un oscillateur commandé numériquement, dans lequel l'unité génératrice d'horloge fournit le signal de sortie de fréquence (f_{NCO}) ou le signal de sortie de fréquence (f_{NCO}) et le signal de sortie de phase (ϕ_{NCO}) en tant que signaux de sortie de l'unité à boucle de Costas.

6. Capteur de vitesse selon au moins l'une des revendications 1 à 5, **caractérisé en ce que** le signal de sortie de l'unité de détection de phase (5) et le signal de sortie de phase (ϕ_{NCO}) de l'unité génératrice d'horloge (3) sont additionnés, notamment dans un additionneur, de manière à générer un signal de phase corrigé (ϕ) constituant un signal de sortie de l'unité à boucle de Costas, notamment en remplacement ou en plus du signal de sortie de phase (ϕ_{NCO}) de l'unité génératrice d'horloge (3).

7. Capteur de vitesse selon au moins l'une des revendications 1 à 6, **caractérisé en ce que** le capteur de vitesse comprend un circuit de sortie auquel un signal de fréquence et au moins un signal de phase sont délivrés par l'unité à boucle de Costas, notamment le signal de sortie de fréquence (f_{NCO}) de l'unité génératrice d'horloge (3) et le signal de sortie de phase (ϕ_{NCO}) de l'unité génératrice d'horloge et/ou le signal de phase corrigé (ϕ), dans lequel le circuit de sortie comporte au moins un étage d'attaque destiné à envoyer le signal de sortie du capteur de vitesse par l'intermédiaire d'au moins un conducteur et une unité logique (8) au moyen de laquelle le signal de sortie du circuit de sortie est doté de propriétés de signal définies en tant qu'interface définie.

8. Capteur de vitesse selon la revendication 7, **caractérisé en ce que** l'unité logique (8) est réalisée de manière à être programmable et/ou commutable, afin que le signal de sortie du circuit de sortie et par conséquent, du capteur de vitesse, soit réalisé de manière à pouvoir être adapté à différentes exigences d'interface.

9. Capteur de vitesse selon la revendication 7 ou 8, **caractérisé en ce que** l'unité logique (8) comporte un dispositif de compensation qui comprend des informations de compensation, notamment dans au moins une table, au moyen desquelles des erreurs d'un codeur, dont l'élément capteur détecte le champ magnétique modulé ou le motif optique, peuvent être compensées et/ou au moyen desquelles des effets de température peuvent être compensés et/ou au moyen desquelles un déphasage peut être réglé ou programmé et/ou au moyen desquelles un temps de retard se produisant sur le trajet de signal à l'intérieur du capteur peut être compensé, de manière à ce que le dispositif de compensation soit commandé de l'extérieur du capteur de vitesse et/ou soit commandé de manière autonome à l'intérieur du capteur de vitesse.
